# EUROPÄISCHE PATENTSCHRIFT

(11) **EP 0 327 940 B1**
(45) Veröffentlichungstag und Bekanntmachung des Hinweises auf die Patenterteilung: **21.07.1993**
(21) Anmeldenummer: 89101697.4
(22) Anmeldetag: 01.02.1989
(51) Int. Cl.: B60N 3/00

(54) **Fahrzeugausrüstungsteil**
Equipment part for vehicles
Elément d'équipement pour véhicules

(30) Priorität: 10.02.1988 DE 3804060
(43) Veröffentlichungstag der Anmeldung: 16.08.1989
(73) Patentinhaber: Gebr. Happich GmbH, D-42097 Wuppertal (DE)
(72) Erfinder: Klose, Odo, Prof., D-5600 Wuppertal 1 (DE)

(56) Entgegenhaltungen:
- BE-A- 451 320
- DE-C- 449 493
- GB-A- 271 441
- US-A- 1 383 730
- US-A- 1 477 031
- US-A- 1 619 725
- US-A- 1 950 927
- US-A- 2 980 169

## Beschreibung

Die Erfindung bezieht sich auf ein Fahrzeugausrüstungsteil, insbesondere für Personenkraftfahrzeuge. Aus US-A-1383730 ist z.B. ein Ausrüstungsteil gemäß dem Oberbegrift des Anspruch 1 bekannt. Mit der vorliegenden Erfindung wird der Zweck verfolgt, den Komfort von Fahrzeugen, insbesondere Personenkraftfahrzeugen zu steigern und der Erfindung liegt demgemäß die Aufgabe zugrunde, ein dem genannten Zweck gerecht werdendes Fahrzeugausrüstungsteil zur Verfügung zu stellen.

Das zur Lösung dieser Aufgabe erfindungsgemäß vorgesehene Fahrzeugausrüstungsteil besteht aus einer innerhalb des Fahrzeugs vor einem Sitz befestigbaren Wickelwelle mit einer darauf auf- und abrollbar angeordneten, als Kälteschutz für Fahrzeuginsassen dienenden Decke und weiterhin aus einem trichterförmigen Führungselement zum Umklappen der Deckenlängsränder um jeweils 180 ° beim Aufrollen der Decke.

Ein Fahrzeugausrüstungsteil der erfindungsgemäßen Art dient als Kälteschutz und erhöht bei Fahrzeuginsassen, z.B. einem Beifahrer, das Wohlbefinden während der Fahrt. Es kann aber auch vom Fahrzeuglenker z.B. bei Rast- oder Schlafpausen mit gleichem Vorteil benutzt werden. Das erfindungsgemäße Fahrzeugausrüstungsteil zeichnet sich weiterhin dadurch aus, daß es bequem in der Handhabung, platzsparend in der Anordnung und kostengünstig in der Herstellung ist.

Bevorzugterweise weist das trichterförmige Führungselement einen rechteckigen Öffnungsquerschnitt auf. Dabei entspricht die Breite der der Wickelwelle benachbarten Trichteröffnung des Führungselements etwa der halben Deckenbreite.

Zufolge dieser Maßnahmen kann eine relativ breite, den Körper eines Fahrzeuginsassen völlig bedeckende Decke verwendet werden, die sich dennoch durch das Führungselement (das auch als Faltvorrichtung bezeichnet werden kann) zwangsgeführt, sehr platzsparend auf der Wickelwelle unterbringen läßt, weil sich ihre Breite durch das Umschlagen ihrer Längsränder beim Aufrollen praktisch halbiert.

Gemäß der Erfindung kann weiterhin vorgesehen sein, daß die Wickelwelle mit einer das Aufrollen der Decke unterstützenden Feder oder alternativ mit einem elektromotorischen Antrieb ausgerüstet ist. Solche Wickelwellen sind z.B. bei Fensterrollos bekannt und können als einbaufertige Kaufteile bezogen werden.

Gemäß einer Weiterbildung der Erfindung ist zumindest die Innenwandung des aus Metall oder Kunststoff bestehenden Führungselements glattwandig ausgebildet und / oder mit einer reibungsmindenden Beschichtung versehen, so daß die Decke beim Auf- und Abrollen nicht sonderlich abnutzt oder aufgerauht werden kann.

Das erfindungsgemäße Fahrzeugausrüstungsteil kann in oder vorzugsweise unterseitig an einer Fahrzeugarmaturentafel befestigbar sein. Es liegt aber auch im Rahmen der Erfindung, das Fahrzeugausrüstungsteil im Bereich der Rückenlehnen von Fahrzeugsitzen anzuordnen, wobei in erster Linie an Sitzreihen in Autobussen, Flugzeugen und Schiffen gedacht ist. In solchen Fällen empfiehlt sich allerdings aus Platzgründen eine bei Nichtgebrauch in eine Versenkung od. dgl. wegklappbare Anordnung des Führungselements.

Ein Ausführungsbeispiel der Erfindung wird nachfolgend anhand einer mehr schematischen Zeichnung näher erläutert. Es zeigen
- Fig. 1: eine schaubildliche Gesamtansicht des Fahrzeugausrüstungsteils,
- Fig. 2: eine Darstellung der Beifahrerseite eines Personenkraftfahrzeuges mit eingebautem Fahrzeugausrüstungsteil und aufgewickelter Decke und
- Fig. 3: dieselbe Ansicht wie Fig. 2 mit abgewickelter Decke.

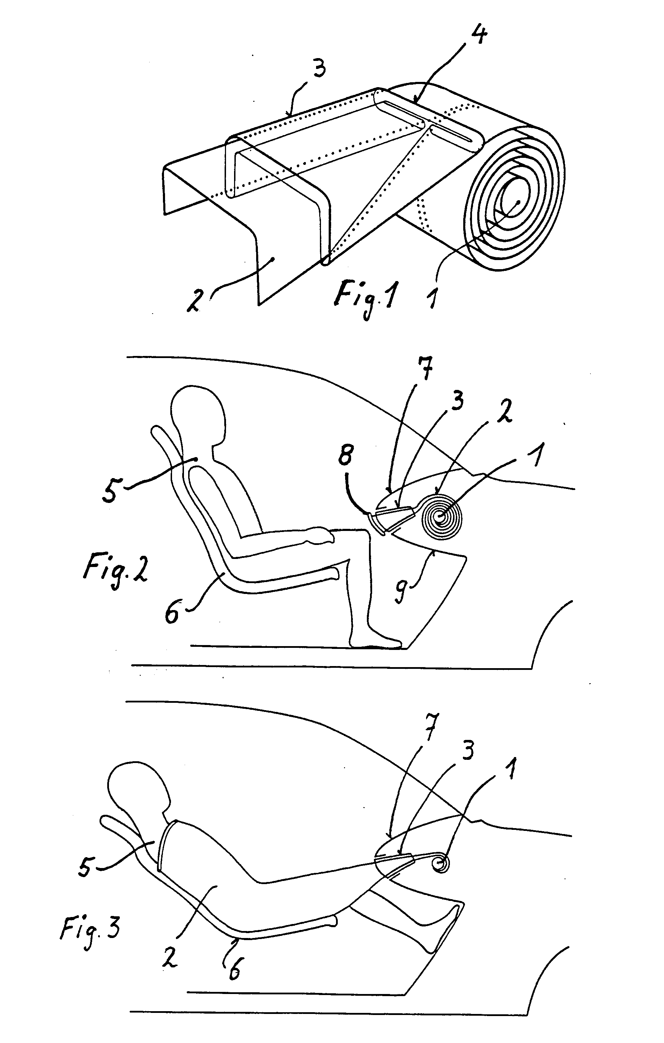

In Fig. 1 ist ein Fahrzeugsausrüstungsteil dargestellt, das im wesentlichen aus einer Wickelwelle 1, einer Decke 2, einem Führungselement 3 und im einzelnen nicht gezeigten Lager- und Befestigungsteilen für die Wickelwelle 1 und dem Führungselement 3 besteht. Die mit einem Längsende an der Wickelwelle 1 befestigte Decke 2 weist um 180 ° umgeklappte Längsränder auf, so daß sich für die Decke 2 im aufgerollten Zustand eine - wie dargestellt - platzsparende Anordnung ergibt. Diese platzsparende Anordnung der Decke 2 ergibt sich beim Aufrollen derselben von allein, weil sie mit umgeklappten Längsrändern an der Wickelwelle 1 befestigt und insbesondere durch das Führungselement 3 entsprechend zwangsgeführt ist.

Das Führungselement 3 besitzt eine trichterförmige Ausbildung mit rechteckiger Querschnittsöffnung und weist an der der Wickelwelle 1 benachbarten Trichteröffnung 4 eine Breite auf, die etwa der halben Deckenbreite entspricht. Die Schlitzhöhe im Bereich der Trichteröffnung 4 entspricht in etwa der doppelten Deckendicke. Das Führungselement 3 kann geschlossen oder, wie dargestellt, bodenseitig mit einer keilförmigen Öffnung ausgebildet sein.

Die Wickelwelle 1 kann beispielsweise mit einer Handkurbel oder vorzugsweise zwecks Komforterhöhung mit einem feder- oder elektromotorischen Antrieb ausgerüstet sein.

In Fig. 2 und 3 ist ein Beifahrer 5 in üblicher Weise in einem Beifahrersitz 6 sitzend dargestellt. Vor dem Beifahrer 5 befindet sich eine Armaturentafel 7, in der das neue Fahrzeugausrüstungsteil versenkt aufgenommen ist. Bei Nichtgebrauch (Fig. 2) kann das Fahrzeugausrüstungsteil durch eine an der Armaturentafel 7 angeordnete Blende oder Klappe 8 abgedeckt sein. Sofern ausreichende Beinfreiheit vorhanden ist, kann das Fahrzeugausrüstungsteil mit Vorteil, insbesondere beim nachträglichen Einbau auch an der Unterseite 9 der Armaturentafel 7 angeordnet werden.

Aus Fig. 3 ist die von der Wickelwelle abgerollte und die Beifahrer 5 schützende Lage der Decke 2 ersichtlich.

## Patentansprüche

1. Fahrzeugausrüstungsteil, insbesondere für Personenkraftfahrzeuge, welches aus einer innerhalb des Fahrzeugs vor einem Sitz (6) befestigbaren Wickelwelle (1) mit einer darauf auf- und abrollbar angeordneten, als Kälteschutz für Fahrzeuginsassen dienenden Decke (2) und weiterhin aus einem Führungselement (3) besteht, dadurch gekennzeichnet, daß das Führungselement (3) trichterförmig ausgebildet ist und zum Umklappen der Deckenlängsränder um jeweils 180 ° beim Aufrollen der Decke (2) dient.

2. Fahrzeugausrüstungsteil nach Anspruch 1, dadurch gekennzeichnet, daß das Führungselement (3) einen rechteckigen Öffnungsquerschnitt aufweist.

3. Fahrzeugausrüstungsteil nach Anspruch 1 oder 2, dadurch gekennzeichnet, daß die Breite der der Wickelwelle (1) benachbarten Trichteröffnung (4) des Führungselements (3) etwa der halben Deckenbreite entspricht.

4. Fahrzeugausrüstungsteil nach einem oder mehreren der Ansprüche 1 bis 3, dadurch gekennzeichnet, daß die Wickelwelle (1) mit einer das Aufrollen der Decke (2) unterstützenden Feder ausgerüstet ist.

5. Fahrzeugausrüstungsteil nach einem oder mehreren der Ansprüche 1 bis 3, dadurch gekennzeichnet, daß die Wickelwelle (1) mit einem elektromotorischen Antrieb ausgerüstet ist.

6. Fahrzeugausrüstungsteil nach Anspruch 1, 2 oder 3, dadurch gekennzeichnet, daß zumindest die Innenwandung des aus Metall oder Kunststoff bestehenden Führungselements (3) glattwandig ausgebildet und/oder mit einer reibungsmindernden Beschichtung versehen ist.

7. Fahrzeugausrüstungsteil nach einem oder mehreren der Ansprüche 1 bis 5, dadurch gekennzeichnet, daß dasselbe in oder, vorzugsweise unterseitig an einer Fahrzeugarmaturentafel (7) befestigbar ist.

## Claims

1. A piece of equipment for a vehicle, especially for passenger vehicles, which comprises a winding shaft (1) which is able to be attached inside the vehicle in front of a seat (6), with a cover (2) arranged so as to be able to be rolled and unrolled thereon to protect the occupants of the vehicle from cold, and which additionally comprises a guide element (3), characterised in that the guide element (3) is constructed as a funnel shape and serves to fold both of the longitudinal edges of the cover through 180° when the cover (2) is rolled up.

2. A piece of equipment for a vehicle according to Claim 1, characterised in that the guide element (3) has an opening with rectangular cross-section.

3. A piece of equipment for a vehicle according to Claim 1 or 2, characterised in that the width of the funnel opening (4) of the guide element (3), adjacent to the winding shaft (1), corresponds to approximately half the width of the cover.

4. A piece of equipment for a vehicle according to one or more of Claims 1 to 3, characterised in that the winding shaft (1) is equipped with a spring which assists the rolling up of the cover (2).

5. A piece of equipment for a vehicle according to one or more of Claims 1 to 3, characterised in that the winding shaft (1) is equipped with an electromotive drive.

6. A piece of equipment for a vehicle according to Claim 1, 2 or 3, characterised in that at least the inner wall of the guide element (3), comprising metal or plastics material, is constructed so as to be smooth-walled and/or is provided with a friction-reducing coating.

7. A piece of equipment for a vehicle according to one or more of Claims 1 to 5, characterised in that latter is able to be attached in or, preferably on the underside, on a vehicle instrument panel (7).

## Revendications

1. Pièce d'équipement pour véhicules, en particulier pour voitures particulières, composée d'un arbre d'enroulement (1), pouvant être fixé à l'intérieur du véhicule, devant un siège (6), avec une couverture (2), qui peut être enroulé sur et déroulé de l'arbre, sert de protection contre le froid pour les passagers, et est composée en outre d'un élément de guidage (3), caractérisée en ce que l'élément de guidage (3) est en forme d'entonnoir et sert à rabattre les bords longitudinaux de la couverture (2), chacun de 180°, lors de l'enroulement.

2. Pièce d'équipement pour véhicules selon la revendication 1, caractérisée en ce que l'élément de guidage (3) présente une section transversale d'ouverture rectangulaire.

3. Pièce d'équipement pour véhicules selon la revendication 1 ou 2, caractérisée en ce que la largeur de l'ouverture en forme d'entonnoir (4), voisine de l'arbre d'enroulement (1), de l'élément de guidage (3) correspond à peu près à la moitié de la largeur de la couverture.

4. Pièce d'équipement pour véhicule selon l'une ou plusieurs des revendications 1 à 3, caractérisée en ce que l'arbre d'enroulement (1) est équipé d'un ressort assistant l'enroulement de la couverture (2).

5. Pièce d'équipement pour véhicule selon l'une ou plusieurs des revendications 1 à 3 caractérisée en ce que l'arbre d'enroulement (1) est équipé d'un entraînement à moteur électrique.

6. Pièce d'équipement pour véhicule selon la revendication 1, 2 ou 3, caractérisée en ce qu'au moins la paroi intérieure de l'élément de guidage (3) composé en métal ou en matière synthétique présente une paroi lisse et/ou un revêtement diminuant le frottement.

7. Pièce d'équipement pour véhicule selon l'une ou plusieurs des revendications 1 à 5, caractérisée en ce qu'elle est susceptible d'être fixée dans ou, de préférence, en face inférieure d'un tableau de bord de véhicule (7).
